# EUROPEAN PATENT APPLICATION

(11) **EP 4 837 928 A1**
(43) Date of publication of application: **11.11.2026**
(21) Application number: 24915716.5
(22) Date of filing: 24.12.2024
(51) Int. Cl.: C08F 8/38, C08F 10/00

(54) **BIOMASS-DERIVED CHLOROSULFONATED POLYETHYLENE**

(30) Priority: 05.01.2024 JP 2024000795; 05.01.2024 JP 2024000796
(71) Applicant: Tosoh Corporation, Shunan-shi, Yamaguchi 746-8501 (JP)
(72) Inventor: KUNIWAKI, Hiroki, Yokkaichi-shi Mie 510-8540 (JP); KOIKE, Tomokazu, Yokkaichi-shi Mie 510-8540 (JP); SAITO, Toshihiro, Yokkaichi-shi Mie 510-8540 (JP)
(74) Representative: Vossius & Partner Patentanwälte Rechtsanwälte mbB
(86) International application number: PCT/JP2024/045683
(87) International publication number: WO 2025/146793

(57) **Abstract**

Provided is a chlorosulfonated polyethylene capable of reducing environmental impact (greenhouse gas emissions) throughout its lifecycle by using plant-derived polyethylene as a raw material in place of conventional fossil fuel-derived polyethylene. A chlorosulfonated polyethylene according to the present invention has a biobased content of 10 to 100% as determined in accordance with ASTM D6866.

## Description

### TECHNICAL FIELD

The present invention relates to chlorosulfonated polyethylene, and more particularly, to biomass-derived chlorosulfonated polyethylene obtained from plant-derived raw materials.

### BACKGROUND ART

In recent years, with increasing calls for the establishment of a circular society, there has been a growing demand in the materials field to shift away from petroleum-based raw materials, and the use of biomass has attracted attention. Likewise, in the field of rubber materials, the production of rubber materials using biomass-derived raw materials has attracted attention, and various studies have been conducted in this regard.

For example, Patent Document 1 discloses the synthesis of polybutadiene rubber using biomass-derived raw materials.

Further, Non-Patent Document 1 reports on the development of ethylenepropylene rubber (EPDM) using biomass-derived raw materials.

### PRIOR ART DOCUMENTS

### PATENT DOCUMENTS

Patent Document 1: JP-A-2014-024915

### NON-PATENT DOCUMENTS

Non-Patent Document 1: NOK Corporation, Press Release, March 25, 2022

### DISCLOSURE OF INVENTION

### TECHNICAL PROBLEM

In view of polyethylene used as a raw material for chlorosulfonated polyethylene, the present invention aims to provide a chlorosulfonated polyethylene capable of reducing environmental impact (greenhouse gas emissions) over its lifecycle by using plant-derived polyethylene as a raw material in place of conventional fossil fuel-based polyethylene.

### SOLUTION TO PROBLEM

As a result of extensive studies made to address the above demand, the present inventors have accomplished the present invention. That is, the present invention includes the following aspects [1] to [11].
[1] A chlorosulfonated polyethylene having a biobased content of 10 to 100% as determined in accordance with ASTM D6866.
[2] The chlorosulfonated polyethylene according to [1], wherein the chlorosulfonated polyethylene has a chlorine content of 10 to 50 wt%.
[3] The chlorosulfonated polyethylene according to [1] or [2], wherein the chlorosulfonated polyethylene has a sulfur content of 0.4 to 5 wt%.
[4] The chlorosulfonated polyethylene according to any one of [1] to [3], wherein the chlorosulfonated polyethylene has a glass transition temperature (Tg) of -40 to 30°C as measured by differential scanning calorimetry (DSC).
[5] The chlorosulfonated polyethylene according to any one of [1] to [4], wherein the chlorosulfonated polyethylene has a Mooney viscosity (ML(1+4) 100°C) of 10 to 150.
[6] The chlorosulfonated polyethylene according to any one of [1] to [5], wherein the chlorosulfonated polyethylene has a 25 wt% toluene solution viscosity of 100 to 10000 mPa·s.
[7] The chlorosulfonated polyethylene according to any one of [1] to [6], wherein the ratio Mw/Mn of a weight-average molecular weight Mw to a number-average molecular weight Mn of the chlorosulfonated polyethylene, as measured by gel permeation chromatography (GPC), is 2.0 to 4.2.
[8] The chlorosulfonated polyethylene according to any one of [1] to [7], wherein the chlorosulfonated polyethylene has a crystalline melting point (Tm) of 30 to 50°C as measured by differential scanning calorimetry (DSC), and a heat of fusion (ΔH) of 0.01 to 1 g/J as calculated from a peak area corresponding to the melting point.
[9] The chlorosulfonated polyethylene according to any one of [1] to [8], wherein the chlorosulfonated polyethylene has a yellowness index YI of 20 to 60 as determined in accordance with ASTM D1925.
[10] A method for producing the chlorosulfonated polyethylene according to any one of [1] to [9], comprising chlorosulfonating a polyethylene having a biobased content of 10 to 100% as determined in accordance with ASTM D6866.
[11] A composition comprising: the chlorosulfonated polyethylene according to any one of [1] to [9]; and a compounding agent.

### ADVANTAGEOUS EFFECTS OF INVENTION

The chlorosulfonated polyethylene according to the present invention exhibits mechanical properties equivalent to those of chlorosulfonated polyethylene produced from conventional fossil fuel-derived raw materials, and thus can serve as a substitute for conventional chlorosulfonated polyethylene. Furthermore, the chlorosulfonated polyethylene according to the present invention has a biobased content of 10 to 100% as determined in accordance with ASTM D6866, and thus can reduce environmental impact (greenhouse gas emissions) over its lifecycle.

### DESCRIPTION OF EMBODIMENTS

Hereinafter, the present invention will be described in detail.

A biomass-derived chlorosulfonated polyethylene according to an embodiment of the present invention is a chlorosulfonated polyethylene having a biobased content of 10 to 100% as determined in accordance with ASTM D6866. From the viewpoint of achieving excellent processing stability and reducing environmental impact over the lifecycle, the biobased content of the chlorosulfonated polyethylene is preferably 30% or more.

Biomass refers to all renewable natural resources derived from plants or animals, including fungi, yeast, algae, and bacteria, as well as their residues. The carbon in olefins obtained from biomass contains a certain amount of biomass-derived C14 isotopes (in a proportion of approximately 10⁻¹²).

Fossil fuels refer to substances such as oil, coal, natural gas, and shale gas, formed from the remains of plants and animals that have been fossilized through burial, compaction, and the like over hundreds of millions of years. Since the carbon in olefins derived from fossil fuels has existed for a period significantly longer than the half-life of the C14 isotope, i.e., 5730 years, biomass-derived C14 isotope is not detectable in olefins derived from fossil fuel.

Biobased content refers to the proportion of naturally derived raw materials present in a product. The biobased content can be determined by measuring the amount of radiocarbon C14 contained in the product, as radiocarbon C14 is present only in naturally derived substances. In the present invention, the biobased content is determined in accordance with ASTM D6866 by measuring the concentration of radiocarbon C14 in chlorosulfonated polyethylene using accelerator mass spectrometry (AMS) and then calculating its ratio relative to carbon derived from fossil fuels that contain no radiocarbon C14.

In contrast to products derived from fossil fuels, the use of biomass-derived products is an effective means to reduce the increase in atmospheric carbon dioxide concentrations and to efficiently limit the expansion of the greenhouse effect. Unlike fossil fuel-derived products, biomass-derived products have the additional property that they can be incinerated at the end of their lifecycle, generating only non-fossil carbon dioxide. The higher the biobased content, the greater the effect of using biomass-derived products.

From the viewpoint of achieving excellent flexibility and mechanical properties, the biomass-derived chlorosulfonated polyethylene according to the present invention preferably has a chlorine content of 10 to 50 wt%, more preferably 20 to 47 wt%, and still more preferably 25 to 45 wt%.

From the viewpoint of forming a vulcanized product with an appropriate crosslink density, the biomass-derived chlorosulfonated polyethylene preferably has a sulfur content of 0.4 to 5 wt%, more preferably 0.5 to 3 wt%, and still more preferably 0.7 to 2 wt%.

From the viewpoint of achieving both particularly excellent mechanical properties and processability, the biomass-derived chlorosulfonated polyethylene preferably has a Mooney viscosity (ML(1+4) 100°C) of 10 to 150, and more preferably 20 to 120.

From the viewpoint of achieving excellent flexibility and mechanical properties, the biomass-derived chlorosulfonated polyethylene preferably has a glass transition temperature (Tg), as measured by differential scanning calorimetry (DSC), of -40 to 30°C, more preferably -35 to 25°C, and still more preferably -30 to 20°C.

From the viewpoint of achieving excellent mechanical properties and processability, the biomass-derived chlorosulfonated polyethylene preferably has a weight-average molecular weight of 5,000 to 600,000, and more preferably 10,000 to 500,000. From the viewpoint of achieving excellent mechanical properties and processing stability, the ratio Mw/Mn, which is the ratio of the weight-average molecular weight Mw to the number-average molecular weight Mn, of the biomass-derived chlorosulfonated polyethylene is preferably 2.0 to 4.2, and more preferably 3.0 to 4.0. The number-average molecular weight and the weight-average molecular weight refer to values measured by gel permeation chromatography (hereinafter sometimes abbreviated as GPC) (values in terms of polystyrene equivalents).

From the viewpoint of achieving excellent mechanical properties and processing stability, the biomass-derived chlorosulfonated polyethylene preferably has a crystalline melting point (Tm) of 30 to 50°C as measured by differential scanning calorimetry (DSC), and a heat of fusion (ΔH) of 0.01 to 1 g/J as calculated from the peak area corresponding to the melting point.

The biomass-derived chlorosulfonated polyethylene preferably has a yellowness index YI of 20 to 60 as determined in accordance with ASTM D1925, to enable yellow coloration of the chlorosulfonated polyethylene.

The biomass-derived chlorosulfonated polyethylene preferably has a 25 wt% toluene solution viscosity of 100 to 10,000 mPa·s, and more preferably 300 to 3,000 mPa·s, to balance mechanical properties and handling properties when used, as a solution in an organic solution, for applications such as coated fabrics, coatings, and adhesives.

As a raw material for the biomass-derived chlorosulfonated polyethylene, a polyethylene having a biobased content of 10 to 100% as determined in accordance with ASTM D6866 is used. The raw material polyethylene may be a single type or a blend of two or more types. A petroleum-derived polyethylene may be used as a component of the blend, provided that the biobased content of the resulting blend is in the range of 10 to 100%.

The main-chain structure of the polyethylene used as the raw material for the biomass-derived chlorosulfonated polyethylene is not particularly limited. Examples of such polyethylene include high-density polyethylene, low-density polyethylene, linear low-density polyethylene, ultra-low-density polyethylene, and the like. These polyethylenes may be used alone or in the form of a blend of two or more as the raw material. For applications such as coated fabrics, coatings, and adhesives, low-density polyethylene is preferred due to its excellent solubility in organic solvents.

The biomass-derived chlorosulfonated polyethylene can be synthesized by any known method. For example, a method may be mentioned in which the polyethylene is dissolved in a chlorinated solvent such as carbon tetrachloride, chloroform, or 1,1,2-trichloroethane, and chlorine gas is then introduced into the solution in the presence of a radical initiator. The reaction temperature is not particularly limited, but is generally 60 to 180°C. The reaction pressure is not particularly limited, but is suitably atmospheric pressure to 1.0 MPa.

After the completion of the chlorination reaction, residual chlorine gas and byproduct hydrogen chloride gas in the reaction mixture are removed from the reaction system by purging with an inert gas such as nitrogen while refluxing the solvent. The resulting chlorosulfonated polyethylene may be separated from the solution by steam distillation, drum drying, extrusion drying, or the like as necessary.

A method for producing the biomass-derived chlorosulfonated polyethylene according to an embodiment of the present invention is not particularly limited. Examples of such production method include: a solution method in which a polyethylene having a biobased content of 10 to 100%, as determined in accordance with ASTM D6866, is uniformly dissolved in an inert solvent and then reacted; a suspension method in which the polyethylene is suspended in a solvent and reacted; and a melt method in which the polyethylene is melted and reacted without a solvent. Among these, a solution method is preferred, as it enables uniform chlorosulfonation of the polyethylene.

The solvent used for chlorosulfonation by the solution method is not particularly limited. Examples of the solvent include carbon tetrachloride, trichloroethane, tetrachloroethane, chloroform, chlorobenzene, and the like, in view of their solubility and reactivity. Trichloroethane is preferred as it provides particularly good reactivity.

In the present invention, the chlorosulfonating agent used for chlorosulfonation of the polyethylene is not particularly restricted. Examples of the chlorosulfonating agent include sulfur dioxide gas and chlorine gas, sulfuryl chloride, and the like. These chlorosulfonating agents may be used alone or in combination of two or more. A catalyst or the like may also be used as necessary to promote the chlorosulfonation reaction. The catalyst can be, for example, an azo compound, an organic peroxide, or the like. Examples of the azo compound include α,α'-azobis(isobutyronitrile), azobis(cyclohexanecarbonitrile), and 2,2'-azobis(2,4-dimethylvaleronitrile). Examples of the organic peroxide include benzoyl peroxide, acetyl peroxide, t-butyl peroxide, and t-butyl peroxybenzoate. An azo compound is preferred due to its high handling stability. For moderate chlorination and chlorosulfonation, α,α'-azobis(isobutyronitrile) is particularly preferred. An amino compound such as pyridine or quinoline, or a phosphate ester compound may be used as a co-catalyst as necessary to promote the chlorosulfonation reaction.

The reaction temperature during chlorosulfonation is not particularly limited, and can be set appropriately according to the melting point of the polyethylene used as the raw material. In view of reactivity and handling ease, the reaction temperature is preferably 50 to 150°C, and more preferably 60 to 130°C. The reaction pressure during chlorosulfonation is not particularly limited, and is, for example, 0 to 1.0 MPa. For moderate chlorosulfonation, the reaction pressure is preferably 0 to 0.6 MPa.

After the completion of the chlorosulfonation reaction, residual sulfur dioxide gas or hydrogen chloride in the reaction mixture is removed by purging with nitrogen. The removal of sulfur dioxide gas or hydrogen chloride under reduced pressure can be performed without any problem.

Additives such as an antioxidant, a stabilizer, and the like may be added before or after the chlorosulfonation reaction. The types of additives are not particularly limited. Examples of the additives include: hindered phenol antioxidants such as 4-t-butylcatechol, 2,6-di-t-butyl-p-cresol, and triethylene glycol bis[3-(3-t-butyl-4-hydroxy-5-methylphenyl)propionate]; epoxy compounds such as epoxidized polybutadiene and bisphenol A-type resins; and the like. These additives may be used alone or in combination of two or more types. The timing of adding the additives is not particularly limited. In view of ease of operation and the efficiency of the additive, it is preferable to add the additives after the chlorosulfonation reaction and after the removal of the residual gas.

The polymer and the solvent in the chlorosulfonated polymer product solution can be separated by any method without particular limitation. For example, steam distillation, a drum dryer, or a vented extruder may be employed.

A composition according to an embodiment of the present invention contains the above-described chlorosulfonated polyethylene and a compounding agent. The biomass-derived chlorosulfonated polyethylene according to the present invention is mainly used in the form of a vulcanized product. The vulcanized product of the biomass-derived chlorosulfonated polyethylene according to the present invention can be obtained by blending or kneading the biomass-derived chlorosulfonated polyethylene with various compounding agents using a roll mill, a Banbury mixer, or similar equipment, followed by vulcanization through pressing, steam treatment, high-frequency (UHF) radiation, electron beam irradiation, or the like. The vulcanization temperature is not particularly limited, but is generally 130 to 200°C, and preferably 150 to 180°C. Post-vulcanization may be performed as necessary. For example, post-vulcanization can be carried out in a heating oven at 140 to 180°C for 2 to 6 hours. As the compounding agents, a vulcanizing agent, a vulcanization accelerator, an acid acceptor, a plasticizer, a reinforcing agent, a filler, a processing aid, an antioxidant, and the like may be used as necessary.

Examples of the vulcanizing agent include: inorganic vulcanizing agents such as sulfur; and organic vulcanizing agents such as thiuram polysulfides, dithiocarbamates, oximes, nitroso compounds, and organic peroxides. Examples of the vulcanization accelerator include thioureas, guanidines, thiazoles, sulfenamides, thiurams, dithiocarbamates, xanthates, and the like. Examples of the acid acceptor include magnesium oxide, zinc oxide, hydrotalcite, litharge, and the like. Examples of the plasticizer include mineral oil-based softeners, vegetable oil-based softeners, synthetic softeners, synthetic plasticizers, and the like. Examples of the reinforcing agent include carbon black, white carbon, and the like. Examples of the filler include calcium carbonates, basic magnesium carbonates, silicic acid, silicates, and the like. Examples of the processing aid include fatty acids, fatty acid esters, fatty acid metal salts, hydrocarbon waxes, and the like. Examples of the antioxidant include amine antioxidants, phenolic antioxidants, sulfur antioxidants, phosphorus antioxidants, waxes, and the like.

The applications of the biomass-derived chlorosulfonated polyethylene are not limited to any specific uses. The biomass-derived chlorosulfonated polyethylene can be used for various industrial components such as automotive hoses, gas hoses, industrial hoses, electrical cable sheaths, coated fabrics, packings, gaskets, rolls, and linings, as well as rubber boats, life jackets, windbreakers, escalator handrails, adhesives, shoe soles, and the like.

### EXAMPLES

Now, the present invention will be described in further detail with reference to Examples. It should, however, be understood that the present invention is by no means restricted to these Examples.

The values used in the Examples were obtained in accordance with the following measurement methods.

### (1) Raw rubber properties

### <Measurement of biobased content>

The biobased content of chlorosulfonated polyethylene was determined in accordance with ASTM D6866 by measuring the radiocarbon C14 concentration of the chlorosulfonated polyethylene using accelerator mass spectrometry (AMS).

In ASTM D6866, it is specified that the biobased content is determined by measuring the radiocarbon C14 concentration of a sample and that of a standard substance representing the atmospheric C14 level in 1950, and then calculating the ratio of these concentrations. Since the atmospheric radiocarbon C14 concentration has increased over time, it is also specified that a correction factor shall be applied to the calculated value. In accordance with ASTM D6866-22, the current atmospheric C14 concentration was assumed to be 100.0 pMC for the calculation.

### <Measurement of chlorine and sulfur contents>

The chlorine content of biomass-derived chlorosulfonated polyethylene was measured by the flask combustion method. For the measurement of the chlorine content, approximately 20 mg of chlorosulfonated polyethylene was combusted in accordance with the oxygen flask combustion method, and the combustion products were allowed to stand in 15 mL of a 1.7 wt% aqueous hydrazinium sulfate solution as an absorption solution. After 40 minutes, the absorption solution was washed out with approximately 100 mL of pure water. The chloride ions in the resulting solution were quantified by potentiometric titration with a 0.5 N aqueous silver nitrate solution using an automatic titrator (MC-3000 and TS-3000, manufactured by HIRANUMA Co., Ltd.) to determine the chlorine content.

The sulfur content of biomass-based chlorosulfonated polyethylene was measured as follows. Approximately 20 mg of chlorosulfonated polyethylene was combusted in accordance with the oxygen flask combustion method. The combustion products were allowed to stand in approximately 10 mL of a 3 wt% aqueous hydrogen peroxide as an absorption solution. After 40 minutes, the absorption solution was washed out with approximately 40 mL of pure water. To this solution, approximately 1 mL of acetic acid, approximately 100 mL of 2-propanol, and approximately 0.5 mL of Arsenazo III were added. The sulfate ions in the resulting solution were quantified by photometric titration with a 0.01 N barium acetate solution to determine the sulfur content.

### <Measurement of molecular weight>

The molecular weight of biomass-derived chlorosulfonated polyethylene was measured by dissolving 10 mg of the chlorosulfonated polyethylene in 10 mL of THF and performing GPC analysis on the resulting polymer solution. The number-average molecular weight (Mn) and the weight-average molecular weight (Mw) were both determined as polystyrene equivalents using standard polystyrene (manufactured by Tosoh Corporation). The measurement conditions were as shown below.
· Model: HLC8420GPC (product name)
· Solvent: THF
· Column temperature: 40°C
· Measurement concentration: 10 mg/10 mL
· Injection amount: 200 µL
· Columns: TSKgel (registered trademark) G7000HXL column, followed by two TSKgel (registered trademark) GMHXL columns (all manufactured by Tosoh Corporation)

### <Measurement of glass transition temperature>

Using a differential scanning calorimeter (DSC 3500 Sirius, manufactured by NETZSCH), a sample was heated from -100°C to 150°C at 10°C/min under a nitrogen gas flow to obtain a DSC curve. The onset of the transition region in the DSC curve was determined as the glass transition temperature (Tg). Further, the peak temperature of the endothermic peak observed between 10°C and 100°C was determined as the crystalline melting temperature (Tm), and the heat of fusion (ΔH) was calculated from the area of the endothermic peak.

### <Measurement of solution viscosity>

Chlorosulfonated polyethylene was dissolved in toluene at a concentration of 10% or 25% by weight. The viscosity of the resulting solution was measured using a B-type viscometer. The measurement was performed at 30 rpm using a No. 3 rotor after the sample container was immersed in a thermostatic bath at 23°C for 1 hour. The value measured after 60 seconds was taken as the solution viscosity.

### <Measurement of Mooney viscosity>

The Mooney viscosity was measured at 100°C in accordance with JIS K6300 using an L-type rotor, with 1 minute of preheating followed by 4 minutes of rotor rotation.

### <Measurement of yellowness index YI>

The yellowness index YI of chlorosulfonated polyethylene was measured in accordance with ASTM D1925 using a chroma meter (CR-5, manufactured by KONICA MINOLTA JAPAN, INC.).

### (2) Compound properties

### <Measurement of Mooney scorch>

Chlorosulfonated polyethylene was compounded in accordance with JIS K6299. The Mooney scorch ML(1) 125°C of the resulting compound was measured in accordance with JIS K6300. Here, Vm refers to the minimum Mooney viscosity after the start of rotor rotation; and the scorch time t5, which is an index of processing stability, refers to the time required for the Mooney viscosity to increase by 5 units from Vm.

### <Rheometer vulcanization test>

Using a rubber process analyzer RPA 2000 manufactured by Alpha Technologies, the measurement was performed at 160°C for 45 minutes, and the minimum torque (ML), maximum torque (MH), and 90% cure time (Tc90) were determined in accordance with JIS K6300.

### (3) Vulcanized rubber properties

### <Properties under normal conditions>

Chlorosulfonated polyethylene was compounded in accordance with JIS K6299, and the resulting sample was vulcanized in a mold with a thickness of 2 mm. Thereafter, the hardness (HS) of the sample was measured at 23°C in accordance with JIS K 6253 using a durometer hardness tester. The tensile strength (TB), elongation at break (EB), and 100% modulus (M100) of the sample were evaluated in accordance with JIS K6251 at 23°C and a tensile speed of 500 mm/min.

### <Heat aging resistance>

Rubber vulcanized from chlorosulfonated polyethylene was subjected to aging in a gear oven at 120°C for 72 hours in accordance with JIS K6257, after which the changes in its properties under normal conditions were evaluated.

The details of the reagents used for the synthesis of chlorosulfonated polyethylene in the Examples are as follows.
Raw material bio-polyethylene 1: grade name SPB208, manufactured by Braskem, melt mass flow rate (ASTM D1238, at 190°C under a load of 2.16 kg): 22 g/10 min, low-density polyethylene (density: 0.923 g/cm³)
Raw material bio-polyethylene 2: grade name SEB853, manufactured by Braskem, melt mass flow rate (ASTM D1238, at 190°C under a load of 2.16 kg): 2.7 g/10 min, low-density polyethylene (density: 0.923 g/cm³)
Raw material bio-polyethylene 3: grade name SHC7260, manufactured by Braskem, melt mass flow rate (ASTM D1238, at 190°C under a load of 2.16 kg): 7.2 g/10 min, high-density polyethylene (density: 0.959 g/cm³)
Raw material petroleum-based polyethylene 1: Petrocen (trademark) 228-1, manufactured by Tosoh Corporation, melt mass flow rate (JIS K6922-1, at 190°C under a load of 2.16 kg): 1.5 g/10 min, low-density polyethylene (density: 0.924 g/cm³)
Raw material petroleum-based polyethylene 2: Petrocen (trademark) 208, manufactured by Tosoh Corporation, melt mass flow rate (JIS K6922-1, at 190°C under a load of 2.16 kg): 23 g/10 min, low-density polyethylene (density: 0.918 g/cm³)
Raw material petroleum-based polyethylene 3: Nipolon Hard (registered trademark) 4030, manufactured by Tosoh Corporation, melt mass flow rate (JIS K6922-1, at 190°C under a load of 2.16 kg): 4.8 g/10 min, high-density polyethylene (density: 0.964g/cm³)
1,1,2-Trichloroethane: manufactured by Tosoh Corporation
α,α'-Azobis(isobutyronitrile): manufactured by FUJIFILM Wako Pure Chemical Corporation
Sulfuryl chloride: manufactured by Sumitomo Seika Chemicals Co., Ltd.
Pyridine: manufactured by FUJIFILM Wako Pure Chemical Corporation
2,2-Bis(4-glycidyloxyphenyl)propane: manufactured by Tokyo Chemical Industry Co., Ltd.

The details of the compounding agents used in the Examples are as follows.
Magnesium oxide (acid acceptor): Kyowamag #150 (manufactured by Kyowa Chemical Industry Co., Ltd.)
Processing aid 1: Splendor (registered trademark) R-300 (fatty acid ester) (manufactured by Kao Corporation)
Processing aid 2: Struktol WB-212 (manufactured by S&S Japan Co., Ltd.)
Carbon (Reinforcing agent): SRF carbon SEAST (registered trademark) S (manufactured by Tokai Carbon Co., Ltd.)
Plasticizer: aliphatic dibasic acid ester DOZ (manufactured by Daihachi Chemical Industry Co., Ltd.)
Vulcanizing agent for CSM: dipentamethylenethiuram tetrasulfide (manufactured by Ouchi Shinko Chemical Industrial Co., Ltd.)
Pentaerythritol (activator): NEULIZER (registered trademark) P (manufactured by Mitsubishi Chemical Corporation)

### Example 1

Under a nitrogen atmosphere, 605 g of raw material bio-polyethylene 1 and 1,411 g of raw material bio-polyethylene 2 were dissolved in 10 L of 1,1,2-trichloroethane in a 40-L glass-lined autoclave at 110°C. To this polymer solution, 0.3 g of pyridine was added at 110°C, followed by dropwise addition over 120 minutes of a solution containing 2.1 g of α,α'-azobis(isobutyronitrile)in 1 kg of 1,1,2-trichloroethane and 3.8 kg of sulfuryl chloride. The pressure inside the autoclave during the reaction was maintained at 0.2 MPa. After the completion of the dropwise addition, the reaction mixture was cooled to 70°C and purged with nitrogen at 70°C for 2 hours. Subsequently, 33 g of 2,2-bis(4-glycidyloxyphenyl)propane was added to the reaction mixture. The reaction mixture was then fed into a drum dryer heated to 155°C to remove the solvent and thereby obtain biomass-based chlorosulfonated polyethylene 1.

The composition and raw rubber properties of chlorosulfonated polyethylene 1, such as Mooney viscosity and biobased content, were measured. The results are summarized in Table 1. As shown in Table 1, chlorosulfonated polyethylene 1 had a chlorine content of 29.7 wt%, a sulfur content of 1.4 wt%, a Mooney viscosity of 28, a biobased content of 99%, and a 25 wt% toluene solution viscosity of 1,700 mPa·s.

**[Table 1]**

| | | | Example 1 | Example 2 | Example 3 | Comparative Example 1 | Comparative Example 2 |
|---|---|---|---|---|---|---|---|
| Biobased fraction in raw material PE (Bio-PE/Petroleum-derived PE) | | | 100 / 0 | 100 / 0 | 80 / 20 | Petroleum-derived PE | 0 / 100 |
| Polymer composition | | | | | | | |
| | Chlorine content | (wt%) | 29.7 | 35.8 | 35.2 | 29.9 | 35.6 |
| | Sulfur content | (wt%) | 1.4 | 0.9 | 0.9 | 1.3 | 1.1 |
| Polymer appearance | | | | | | | |
| | Yellowness index YI | | 41.8 | 5.2 | 5.3 | 6.4 | 13.2 |
| Molecular weight | | | | | | | |
| | Mooney viscosity ML (1+4)100°C | | 28 | 64 | 61 | 28 | 56 |
| | Number-average molecular weight (Mn) | (×10⁴) | 4.9 | 6.1 | 6.3 | 5.2 | 5.2 |
| | Weight-average molecular weight (Mw) | (×10⁴) | 25 | 21.1 | 23.7 | 31 | 23.7 |
| | Mw/Mn | | 5.1 | 3.5 | 3.8 | 5.9 | 4.6 |
| DSC Measurement | | | | | | | |
| | Glass transition temperature (Tg) | (°C) | -29.7 | -21.7 | -23.2 | -27.7 | -24.3 |
| | Crystalline melting point (Tm) | (°C) | 10.1 | 42.2 | 42.1 | 12.3 | - |
| | Heat of fusion (ΔH) | (J/g) | 4.2 | 0.16 | 0.14 | 4.7 | - |
| Solubility | | | | | | | |
| | 10% Toluene solution viscosity | (mPa·s) | 40 | 300 | 460 | 44 | 640 |
| | 25% Toluene solution viscosity | (mPa·s) | 1700 | Insoluble | Insoluble | 2000 | Insoluble |
| Biobased content | | | | | | | |
| | Radiocarbon C14 concentration | pMC (%) | 99.42±0.23 | 97.71±0.21 | 78.17±0.20 | 0.05±0.01 | 0.12±0.01 |
| | Biobased content | (%) | 99 | 98 | 78 | 0 | 0 |

Using an open roll mill, 100 parts by weight of chlorosulfonated polyethylene 1 were mixed with 6 parts by weight of magnesium oxide, 1 part by weight of processing aid 1, 1 part by weight of processing aid 2, 30 parts by weight of carbon, and 15 parts by weight of plasticizer. The resulting mixture was compounded with 2 parts by weight of vulcanizing agent for CSM and 3 parts by weight of pentaerythritol in the open roll mill, thereby yielding chlorosulfonated polyethylene composition 1. Mooney scorch and rheometer vulcanization tests for unvulcanized rubber were performed on chlorosulfonated polyethylene composition 1. The results are shown in Table 2. Furthermore, chlorosulfonated polyethylene composition 1 was press-vulcanized at 160°C for 20 minutes to obtain a vulcanized product. The vulcanized product was then evaluated for the properties under normal conditions and heat aging resistance. The results are also shown in Table 2. As shown in Table 2, the above-obtained chlorosulfonated polyethylene exhibited properties comparable to those of chlorosulfonated polyethylene produced using petroleum-derived polyethylene as a raw material.

**[Table 2]**

| | | | | Example 1 | Example 2 | Example 3 | Comparative Example 1 | Comparative Example 2 |
|---|---|---|---|---|---|---|---|---|
| Biobased fraction in raw material PE (Bio-PE/Petroleum-derived PE) | | | | 99/0 | 100 / 0 | 80 / 20 | 0 / 100 | 0 / 100 |
| Compound properties | | | | | | | | |
| | Mooney scorch ML(1)125°C | | | | | | | |
| | | Vm | (t5) | 32 | 36 | 37 | 25 | 35 |
| | | t5 | (min) | 23.2 | 11.0 | 11.4 | 27.6 | 8.9 |
| | Rheometer vulcanization test | | | | | | | |
| | | ML | (dNm) | 2.8 | 2.7 | 2.9 | 2.2 | 2.6 |
| | | MH | (dNm) | 89.6 | 73.4 | 75.2 | 82.9 | 74.6 |
| | | Tc90 | (min) | 15.5 | 10.8 | 9.6 | 15.6 | 9.9 |
| Vulcanization conditions | | | | | | | | |
| | Temperature | | (°C) | 160 | 160 | 160 | 160 | 160 |
| | Time | | (min) | 20 | 20 | 20 | 20 | 20 |
| Vulcanized rubber properties | | | | | | | | |
| | Properties under normal conditions | | | | | | | |
| | | Hs(JIS A) | | 63 | 59 | 58 | 61 | 58 |
| | | TB | (MPa) | 17.1 | 37.2 | 42.1 | 16.1 | 39.1 |
| | | EB | (%) | 270 | 510 | 510 | 260 | 490 |
| | | M100 | (MPa) | 3.5 | 1.8 | 1.7 | 3 | 1.9 |
| | Heat aging resistance | | | | | | | |
| | | ΔHs | (point) | +5 | +2 | +3 | +5 | +3 |
| | | ΔTB | (%) | +7.0 | -35.2 | -39.4 | +21.7 | -41.7 |
| | | ΔEB | (%) | -18.5 | -21.6 | -21.6 | -11.5 | -20.4 |

### Comparative Example 1

Except for using 907.2 g of petroleum-derived polyethylene 1 and 1,108.8 g of petroleum-derived polyethylene 2 as raw materials, petroleum-derived chlorosulfonated polyethylene 2 was prepared in the same manner as in Example 1. The composition and raw rubber properties of petroleum-derived chlorosulfonated polyethylene 2, such as Mooney viscosity and biobased content, were measured. The results are summarized in Table 1. As shown in Table 1, petroleum-derived chlorosulfonated polyethylene 2 had a chlorine content of 29.9 wt%, a sulfur content of 1.3 wt%, a Mooney viscosity of 28, a biobased content of 0%, and a 25 wt% toluene solution viscosity of 2,000 mPa·s.

Except for using petroleum-derived chlorosulfonated polyethylene 2 in place of biomass-derived chlorosulfonated polyethylene 1, chlorosulfonated polyethylene composition 2 was prepared in the same manner as in Example 1.

Mooney scorch and rheometer vulcanization tests for unvulcanized rubber were performed on chlorosulfonated polyethylene composition 2. The results are shown in Table 2. Furthermore, chlorosulfonated polyethylene composition 2 was press-vulcanized at 160°C for 20 minutes to obtain a vulcanized product. The vulcanized product was evaluated for the properties under normal conditions and heat aging resistance. The results are also shown in Table 2.

### Example 2

Under a nitrogen atmosphere, 1,008 g of raw material bio-polyethylene 3 was dissolved in 10 L of 1,1,2-trichloroethane in a 40-L glass-lined autoclave at 120°C. To this polymer solution, 0.3 g of pyridine was added at 110°C, followed by dropwise addition over 70 minutes of a solution of 2.1 g of α,α'-azobis(isobutyronitrile)in 1 kg of 1,1,2-trichloroethane and 3.8 kg of sulfuryl chloride. The pressure inside the autoclave during the reaction was maintained at 0.2 MPa. After the completion of the dropwise addition, the reaction mixture was cooled to 70°C and purged with nitrogen at 70°C for 2 hours. Subsequently, 18 g of 2,2-bis(4-glycidyloxyphenyl)propane was added to the reaction mixture. The reaction mixture was fed into a drum dryer heated to 155°C to remove the solvent and thereby obtain biomass-based chlorosulfonated polyethylene 3.

The raw rubber properties of chlorosulfonated polyethylene 3 were measured. The results are shown in Table 1. As shown in Table 1, chlorosulfonated polyethylene 3 had a chlorine content of 35.8 wt%, a sulfur content of 0.9 wt%, a Mooney vicosity of 64, a ratio Mw/Mn of 3.5, a biobased content of 98%, and a 10 wt% toluene solution viscosity of 300 mPa·s.

Using an open roll mill, 100 parts by weight of chlorosulfonated polyethylene 3 were mixed with 10 parts by weight of magnesium oxide. The resulting mixture was compounded with 2 parts by weight of vulcanizing agent for CSM and 3 parts by weight of pentaerythritol in the open roll mill, thereby yielding chlorosulfonated polyethylene composition 3. Mooney scorch and rheometer vulcanization tests for unvulcanized rubber were performed on chlorosulfonated polyethylene composition 3. The results are shown in Table 2. As shown in Table 2, although Tc90 was almost comparable to that of petroleum-derived chlorosulfonated polyethylene, t5 was longer than that of petroleum-derived chlorosulfonated polyethylene, indicating that the above-obtained chlorosulfonated polyethylene exhibited good processing stability. Furthermore, chlorosulfonated polyethylene composition 2 was press-vulcanized at 160°C for 20 minutes to obtain a vulcanized product. The vulcanized product was evaluated for the properties under normal conditions and heat aging resistance. The results are also shown in Table 2. As can be seen from Table 2, the above-obtained chlorosulfonated polyethylene exhibited mechanical properties equivalent to those of chlorosulfonated polyethylene produced using petroleum-derived polyethylene as a raw material.

### Example 3

Except for using 806 g of bio-polyethylene 3 and 202 g of petroleum-derived polyethylene 3 as raw materials, biomass-derived chlorosulfonated polyethylene 4 was prepared in the same manner as in Example 2.

The raw rubber properties of chlorosulfonated polyethylene 4 were measured. The results are shown in Table 1. As shown in Table 1, chlorosulfonated polyethylene 4 had a chlorine content of 35.2 wt%, a sulfur content of 0.9 wt%, a Mooney viscosity of 61, a ratio Mw/Mn of 3.8, a biobased content of 78%, and a 10 wt% toluene solution viscosity of 460 mPa·s.

Except for using chlorosulfonated polyethylene 4 in place of chlorosulfonated polyethylene 3, chlorosulfonated polyethylene composition 4 was prepared in the same manner as in Example 2. Mooney scorch and rheometer vulcanization tests for unvulcanized rubber were performed on chlorosulfonated polyethylene composition 4. The results are shown in Table 2. As shown in Table 2, although Tc90 was almost comparable with that of petroleum-derived chlorosulfonated polyethylene, t5 was longer than that of petroleum-derived chlorosulfonated polyethylene, indicating that the above-obtained chlorosulfonated polyethylene exhibited good processing stability. Furthermore, chlorosulfonated polyethylene composition was press-vulcanized at 160°C for 20 minutes to obtain a vulcanized product. The vulcanized product was evaluated for the properties under normal conditions and heat aging resistance. The results are also shown in Table 2. As shown in Table 2, the above-obtained chlorosulfonated polyethylene exhibited mechanical properties equivalent to those of chlorosulfonated polyethylene produced using petroleum-derived polyethylene as a raw material.

### Comparative Example 2

Except for using petroleum-derived polyethylene 3 as a raw material in place of raw material bio-polyethylene 3, petroleum-derived chlorosulfonated polyethylene 5 was prepared in the same manner as in Example 2.

The raw rubber properties of chlorosulfonated polyethylene 5 were measured. The results are shown in Table 1. As shown in Table 1, the chlorosulfonated polyethylene 5 had a chlorine content of 35.6 wt%, a sulfur content of 1.1 wt%, a Mooney viscosity of 56, a ratio Mw/Mn of 4.6, a biobased content of 0%, and a 10 wt% toluene solution viscosity of 640 mPa·s. Except of using chlorosulfonated polyethylene 5 in place of biomass-derived chlorosulfonated polyethylene 3, chlorosulfonated polyethylene composition 5 was prepared in the same manner as in Example 2. Mooney scorch and rheometer vulcanization tests for unvulcanized rubber were performed on chlorosulfonated polyethylene composition 5. The results are shown in Table 2. Furthermore, the chlorosulfonated polyethylene composition was press-vulcanized at 160°C for 20 minutes to obtain a vulcanized product. The vulcanized product was evaluated for the properties under normal conditions and heat aging resistance. The results are also shown in Table 2.

Although the present invention has been described in detail with reference to the above specific embodiments, it will be apparent to those skilled in the art that various changes and modifications can be made without departing from the spirit and scope of the present invention.

The entire disclosures of Japanese Patent Application Nos. 2024-000795 and 2024-000796 both filed on January 5, 2024, including specifications, claims and summaries, are incorporated herein by reference in their entireties.

## Claims

1. A chlorosulfonated polyethylene having a biobased content of 10 to 100% as determined in accordance with ASTM D6866.

2. The chlorosulfonated polyethylene according to Claim 1, wherein the chlorosulfonated polyethylene has a chlorine content of 10 to 50 wt%.

3. The chlorosulfonated polyethylene according to Claim 1, wherein the chlorosulfonated polyethylene has a sulfur content of 0.4 to 5 wt%.

4. The chlorosulfonated polyethylene according to Claim 1, wherein the chlorosulfonated polyethylene has a glass transition temperature (Tg) of -40 to 30°C as measured by differential scanning calorimetry (DSC).

5. The chlorosulfonated polyethylene according to Claim 1, wherein the chlorosulfonated polyethylene has a Mooney viscosity (ML(1+4) 100°C) of 10 to 150.

6. The chlorosulfonated polyethylene according to Claim 1, wherein the chlorosulfonated polyethylene has a 25 wt% toluene solution viscosity of 100 to 10,000 mPa·s.

7. The chlorosulfonated polyethylene according to Claim 1, wherein the ratio Mw/Mn of a weight-average molecular weight Mw to a number-average molecular weight Mn of the chlorosulfonated polyethylene, as measured by gel permeation chromatography (GPC), is 2.0 to 4.2.

8. The chlorosulfonated polyethylene according to Claim 1, wherein the chlorosulfonated polyethylene has a crystalline melting point (Tm) of 30 to 50°C as measured by differential scanning calorimetry (DSC), and a heat of fusion (ΔH) of 0.01 to 1 g/J as calculated from a peak area corresponding to the melting point.

9. The chlorosulfonated polyethylene according to Claim 1, wherein the chlorosulfonated polyethylene has a yellowness index YI of 20 to 60 as determined in accordance with ASTM D1925.

10. A method for producing the chlorosulfonated polyethylene according to any one of Claims 1 to 9, comprising chlorosulfonating a polyethylene having a biomass content of 10 to 100% as determined in accordance with ASTM D6866.

11. A composition comprising: the chlorosulfonated polyethylene according to any one of Claims 1 to 9; and a compounding agent.
